# EUROPEAN PATENT APPLICATION

(11) **EP 3 462 303 A1**
(43) Date of publication of application: **03.04.2019**
(21) Application number: 18197898.2
(22) Date of filing: 01.10.2018
(51) Int. Cl.: G06F 3/12

(54) **IMAGE FORMING APPARATUS AND IMAGE FORMING METHOD**

(30) Priority: 02.10.2017 JP 2017193088
(71) Applicant: Toshiba Tec Kabushiki Kaisha, Shinagawa-ku Tokyo (JP); Kabushiki Kaisha Toshiba, Minato-ku, Tokyo (JP)
(72) Inventor: Saito, Seiji, Tokyo, 141-8562 (JP)
(74) Representative: Hoffmann Eitle

(57) **Abstract**

An image forming apparatus includes a resource information acquisition unit, an apparatus information acquisition unit, and a determination unit of a processor. The resource information acquisition unit acquires resource information indicating a resource of the image forming apparatus required to execute an application. The apparatus information acquisition unit acquires apparatus information indicating a use situation of the resource of the image forming apparatus. The determination unit determines whether or not the image forming apparatus can execute the application if the application is installed on the basis of the resource information and the apparatus information.

## Description

### CROSS-REFERENCE TO RELATED APPLICATION

This application is based upon and claims the benefit of priority from Japanese Patent Application No. 2017-193088, filed October 2, 2017, the entire contents of which are incorporated herein by reference.

### FIELD

Embodiments described herein relate generally to an image forming apparatus and an image forming method.

### BACKGROUND

In recent years, an image forming apparatus to and in which an application can be added and installed has been employed. However, in an image forming apparatus, resources such as a memory region, a network band, or a CPU are restricted. Thus, in the image forming apparatus, if the number of applications is increased, an additionally installed application may not be stably executed.

### SUMMARY OF THE INVENTION

One of the objects of the present invention is to improve prior art techniques and overcome at least some of the prior art problems as for instance above illustrated.

According to a first aspect of the present invention, it is provided an image forming apparatus comprising:
a processor including a resource information acquisition unit, an apparatus information acquisition unit, and a determination unit,
the resource information acquisition unit configured to acquire resource information indicating a resource of the image forming apparatus required to execute an application;
the apparatus information acquisition unit configured to acquire apparatus information indicating a use situation of the resource of the image forming apparatus; and
the determination unit configured to determine whether or not the image forming apparatus can execute the application when the application is installed on the basis of the resource information and the apparatus information.

Optionally, the apparatus according to the first aspect of the invention further comprises an image generator configured to generate image information indicating a result determined by the determination unit; and an output device configured to output the image information.

Optionally, in the apparatus according to the first aspect of the invention, when the result indicates that the image forming apparatus can execute the application, the output device is configured to display image information prompting a user to install the application, and when the result indicates that the image forming apparatus cannot execute the application, the output device is configured to not display image information prompting a user to install the application.

Optionally, in the apparatus according to the first aspect of the invention, when the result indicates that the image forming apparatus cannot execute the application, the determination unit is configured to prompt another image forming apparatus connected to a same network as the image forming apparatus to install the application.

Optionally, in the apparatus according to the first aspect of the invention, the image generator is configured to generate image information for displaying a result of determining whether or not the image forming apparatus has a resource required to execute the application in a table form for each resource.

Optionally, in the apparatus according to the first aspect of the invention, when the application as a first application is installed and an operation of the image forming apparatus is unstable, the determination unit is configured to specify a second application among applications already installed in the image forming apparatus, the first application being able to be executed by deleting the second application from the image forming apparatus.

Optionally, in the apparatus according to the first aspect of the invention, the determination unit is configured to determine whether or not the image forming apparatus can execute the application based on whether the resource information and the apparatus information satisfy a predetermined determination condition.

Optionally, in the apparatus according to the first aspect of the invention, the predetermined determination condition is a value obtained from the resource information and the apparatus information exceeding a threshold value.

Optionally, in the apparatus according to the first aspect of the invention, the predetermined determination condition is whether the apparatus information indicates the apparatus has a specific function.

Optionally, in the apparatus according to the first aspect of the invention, when the apparatus information indicates the apparatus does not have the specific function, the apparatus is configured to add the specific function.

According to a second aspect of the invention, it is provided an image forming method comprising:
acquiring resource information indicating a resource of an image forming apparatus required to execute an application;
acquiring apparatus information indicating a use situation of the resource of the image forming apparatus; and
determining whether or not the image forming apparatus can execute the application when the application is installed on the basis of the resource information and the apparatus information.

Optionally, the image forming method according to the second aspect of the invention further comprises generating image information indicating a result determined by the determining; and outputting the image information.

Optionally, in the image forming method according to the second aspect of the invention, when the result indicates that the image forming apparatus can execute the application, displaying image information prompting a user to install the application, and when the result indicates that the image forming apparatus cannot execute the application, not displaying image information prompting a user to install the application.

Optionally, in the image forming method according to the second aspect of the invention, when the result indicates that the image forming apparatus cannot execute the application, prompting another image forming apparatus connected to a same network as the image forming apparatus to install the application.

Optionally, the image forming method according to the second aspect of the invention further comprises generating image information for displaying a result of determining whether or not the image forming apparatus has a resource required to execute the application in a table form for each resource.

Optionally, in the image forming method according to the second aspect of the invention, when the application as a first application is installed and an operation of the image forming apparatus is unstable, specifying a second application among applications already installed in the image forming apparatus, the first application being able to be executed by deleting the second application from the image forming apparatus.

Optionally, in the image forming method according to the second aspect of the invention, when determining whether or not the image forming apparatus can execute the application is based on whether the resource information and the apparatus information satisfy a predetermined determination condition.

Optionally, in the image forming method according to the second aspect of the invention, when the predetermined determination condition is a value obtained from the resource information and the apparatus information exceeding a threshold value.

Optionally, in the image forming method according to the second aspect of the invention, when the predetermined determination condition is whether the apparatus information indicates the apparatus has a specific function.

Optionally, in the image forming method according to the second aspect of the invention, when the apparatus information indicates the apparatus does not have the specific function, adding the specific function.

### DESCRIPTION OF THE DRAWINGS

FIG. 1 is an exterior view illustrating an example of the entire configuration of an image forming apparatus according to an exemplary embodiment.
FIG. 2 is a functional block diagram illustrating a functional configuration.
FIG. 3 is a diagram illustrating one specific example of a log.
FIG. 4 is a diagram illustrating one specific example of an image indicating a determination result.
FIG. 5 is a diagram illustrating one specific example of a case of a peripheral apparatus being connected to the image forming apparatus.
FIG. 6 is a flowchart illustrating a flow of an installation determination process.

### DETAILED DESCRIPTION

An object of an exemplary embodiment is to provide an image forming apparatus and an image forming method capable of determining whether or not an added application is stably executed.

According to an exemplary embodiment, there is provided an image forming apparatus including a resource information acquisition unit, an apparatus information acquisition unit, and a determination unit. The resource information acquisition unit acquires resource information indicating a resource of the image forming apparatus required to execute an application. The apparatus information acquisition unit acquires apparatus information indicating a use situation of the resource of the image forming apparatus. The determination unit determines whether or not the image forming apparatus can execute the application if the application is installed on the basis of the resource information and the apparatus information.

Hereinafter, with reference to the drawings, a description will be made of an image forming apparatus and an image forming method of an exemplary embodiment.

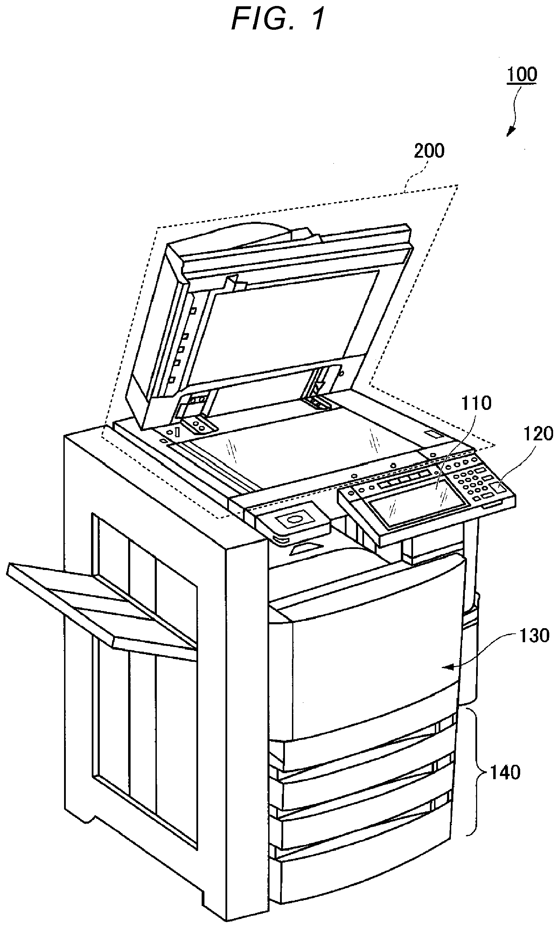

FIG. 1 is an exterior view illustrating an example of the entire configuration of an image forming apparatus 100 of an exemplary embodiment. The image forming apparatus 100 is, for example, a multi-function peripheral. The image forming apparatus 100 includes a display 110, a control panel 120, a printer section 130, a sheet accommodation section 140, and an image reading section 200. The printer section 130 of the image forming apparatus 100 is a device fixing a toner image.

The image forming apparatus 100 forms an image on a sheet by using a developing agent such as toner. The sheet is, for example, paper or label paper. The sheet may be any object as long as the image forming apparatus 100 can form an image on a surface thereof.

The display 110 is an image display device such as a liquid crystal display or an organic electroluminescence (EL) display. The display 110 displays various pieces of information regarding the image forming apparatus 100. The display 110 is an aspect of an output unit. The display 110 functions as an output unit if image information generated by an image generation unit 166 which will be described later is output.

The control panel 120 has a plurality of buttons. The control panel 120 receives a user's operation. The control panel 120 outputs a signal corresponding to an operation performed by the user to a control unit of the image forming apparatus 100. The display 110 and the control panel 120 may be formed as an integral touch panel. The control panel 120 is an aspect of an operation unit. The operation unit receives whether or not an application is to be installed.

The printer section 130 forms an image on a sheet on the basis of image information generated by the image reading section 200 or image information received via a communication path. The printer section 130 forms an image, for example, through the following processes. An image forming unit of the printer section 130 forms an electrostatic latent image on a photoconductive drum on the basis of image information. The image forming unit of the printer section 130 attaches a developing agent to the electrostatic latent image so as to form a visible image. There is toner as a specific example of the developing agent. A transfer unit of the printer section 130 transfers the visible image onto a sheet. A fixing unit of the printer section 130 performs heating and pressing on the sheet so as to fix the developing agent forming the visible image onto the sheet. The sheet on which an image is formed may be a sheet accommodated in the sheet accommodation section 140, and may be a sheet which is manually fed.

The sheet accommodation section 140 accommodates a sheet used to form an image in the printer section 130.

The image reading section 200 reads image information of a reading target as brightness and darkness of light. The image reading section 200 records the read image information. The recorded image information may be transmitted to other information processing apparatus via a network. The recorded image information may be formed as an image on a sheet by the printer section 130.

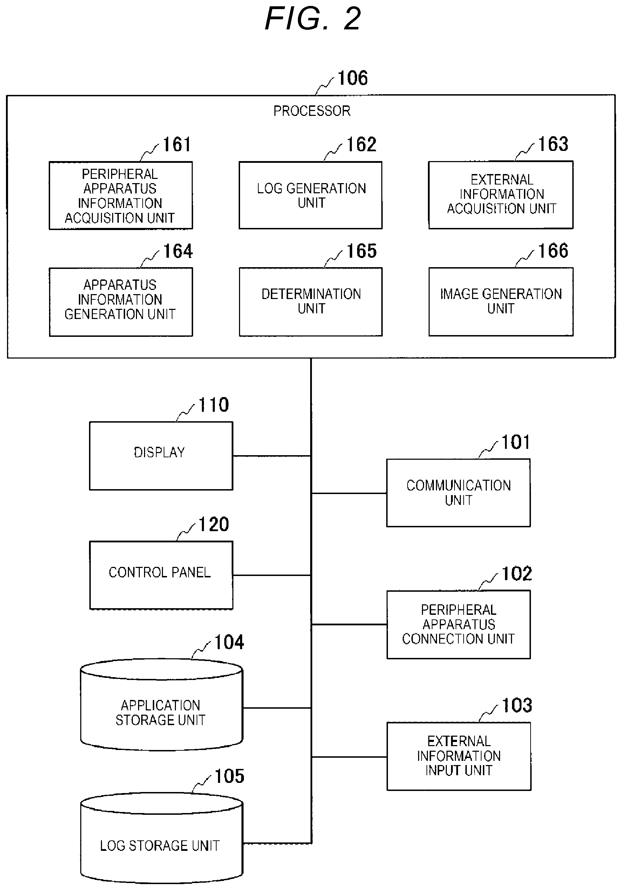

FIG. 2 is a functional block diagram illustrating a functional configuration of the image forming apparatus 100 of the exemplary embodiment. The image forming apparatus 100 includes a communication unit 101, a peripheral apparatus connection unit 102, an external information input unit 103, an application storage unit 104, a log storage unit 105, a processor 106, the display 110, and the control panel 120. Hereinafter, descriptions of functional units described in FIG. 1 will be omitted.

The communication unit 101 is a network interface. The communication unit 101 performs communication with an external terminal via a network. The communication unit 101 may perform communication according to communication methods such as a wireless local area network (LAN), a wired LAN, Bluetooth (registered trademark), or Long Term Evolution (LTE) (registered trademark) . The external terminal may be an information processing apparatus such as a personal computer, a tablet computer, a smart phone, or a server. The communication unit 101 is an aspect of an output unit. The communication unit 101 functions as an output unit if image information is output to an external terminal.

The peripheral apparatus connection unit 102 is an interface for connecting a peripheral apparatus to the image forming apparatus 100. The peripheral apparatus connection unit 102 may be an interface such as a USB port, an SCSI port, ATA, IEEE1394, or IEEE1284. The peripheral apparatus may be any apparatus such as a postprocessing apparatus, an IC card reader, a microphone, a camera, a display, or a keyboard as long as the apparatus can be connected to the peripheral apparatus connection unit 102. A plurality of peripheral apparatus connection units 102 may be provided in the image forming apparatus 100.

The external information input unit 103 is an interface for acquiring information from the outside of the image forming apparatus 100. The external information input unit 103 may be, for example, a network interface such as RJ-45, or an interface such as an optical disc drive or a USB port. A plurality of external information input units 103 may be provided in the image forming apparatus 100.

The application storage unit 104 is formed by using a storage device such as a magnetic hard disk device or a semiconductor storage device. The application storage unit 104 stores applications installed in the image forming apparatus 100. The image forming apparatus 100 reads an application, and executes a function of the application. The application, for example, may be an application developed by a manufacturer of the image forming apparatus 100, and may be an application developed by a third party. If an installation instruction is received, the application storage unit 104 stores an application for which the instruction is given.

The log storage unit 105 is formed by using a storage device such as a magnetic hard disk device or a semiconductor storage device. The log storage unit 105 stores a log. The log may be, for example, information indicating operation history indicating the operation content of the image forming apparatus 100 or a peripheral apparatus. The log is generated by a log generation unit 162. In the generated log, for example, the operation history such as a central processing unit (CPU) occupancy, a memory usage, a network occupancy, the number of used sheets, an amount of consumed toner, use situations of mounted options (a finisher, stapling, hole punching, an paper feeding device, and the like) is stored in correlation with the date and time.

The processor 106 controls an operation of each unit of the image forming apparatus 100 or the peripheral apparatus. The processor 106 is realized by a device including, for example, a CPU and a random access memory (RAM). The processor 106 functions as a peripheral apparatus information acquisition unit 161, the log generation unit 162, an external information acquisition unit 163, an apparatus information generation unit 164, a determination unit 165, and the image generation unit 166 by executing an installation determination program.

The peripheral apparatus information acquisition unit 161 acquires the operation history of a peripheral apparatus connected to the image forming apparatus 100, via the peripheral apparatus connection unit 102. The operation history includes the content of operations performed by the peripheral apparatus and information indicating the extent of usage of a resource of the image forming apparatus 100. In the operation history, for example, a CPU occupancy, a memory usage, a network occupancy, the number of used sheets, an amount of consumed toner, use situations of mounted options (a finisher, stapling, hole punching, a paper feeding device, and the like) in the peripheral apparatus are stored in correlation with the date and time.

The log generation unit 162 generates a log. The log generation unit 162 stores the generated log in the log storage unit 105. The log is generated on the basis of the operation history of the image forming apparatus 100 or the peripheral apparatus.

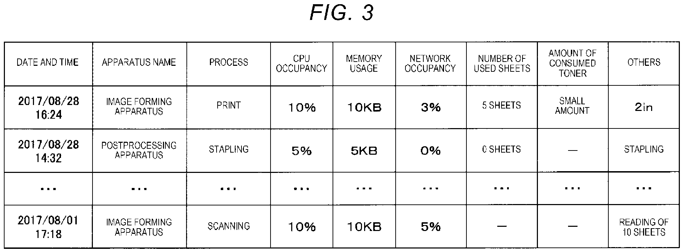

FIG. 3 is a diagram illustrating one specific example of the log of the exemplary embodiment. The log has respective values of the date and time, an apparatus name, a process, a CPU occupancy, a memory usage, a network occupancy, the number of used sheets, an amount of consumed toner, and others. The date and time is the date and time at which the image forming apparatus 100 or the peripheral apparatus performed a process. The apparatus name is the name of an apparatus which performed the process. The process indicates the name of a process performed by the apparatus. The CPU occupancy is an amount of a CPU occupied for the process. The memory usage is an amount of a memory used for the process. The network occupancy is a network band used for the process. The number of used sheets is the number of sheets used for the process. The amount of consumed toner is an amount of toner used for the process. The others include a setting added to the process.

According to the log on the uppermost part illustrated in FIG. 3, it can be seen that printing was performed by the image forming apparatus at 16:24, August 28, 2017. In the performed printing, it can be seen that 10% of the CPU was occupied, 10 KB of the memory was used, and 3% of the network was used. It can be seen that five sheets were used for the printing, a small amount of toner was used for the printing, and the printing was integrated into 2in. The logs illustrated in FIG. 3 are only specific examples. Thus, a log may be generated in an aspect which is different from that in FIG. 3. For example, the log may have an account name of a user giving an instruction for a process.

Referring to FIG. 2 again, the description of the functional block diagram of the image forming apparatus 100 will be continued. The external information acquisition unit 163 acquires predetermined information from the outside via the external information input unit 103. The predetermined information includes a list of applications which can be installed in the image forming apparatus 100, and resource information of the applications. The outside may be, for example, a server connected to a network, and may be a storage device such as a USB memory. The resource information indicates information regarding resources of the image forming apparatus 100 required to install and execute an application. The resource information may include respective values of, for example, a capacity of a storage medium required to install an application, a network occupancy, a CPU occupancy, a memory usage, the number of used sheets, an amount of consumed toner, and whether or not mounted options (a finisher, stapling, hole punching, a paper feeding device, and the like) are in use. The resource information may be correlated with the date and time. The external information acquisition unit 163 is an aspect of a resource information acquisition unit. The resource information acquisition unit acquires resource information indicating a resource of the image forming apparatus occupied by an application. If an installation instruction is received, the external information acquisition unit 163 acquires an installation target application via the external information input unit 103.

The apparatus information generation unit 164 generates apparatus information on the basis of a log, and acquires the generated apparatus information. The apparatus information is information indicating a use situation of a resource of the image forming apparatus 100. The apparatus information may include respective values of, for example, a residual capacity of a storage medium of the image forming apparatus 100, a network occupancy, a CPU occupancy, the number of used sheets, the number of stored sheets, an amount of consumed toner, a memory usage (average), a memory usage (maximum), and whether or not mounted options (a finisher, stapling, hole punching, a paper feeding device, and the like) are in use. The apparatus information may be information correlated with the date and time. The apparatus information generation unit 164 is an aspect of an apparatus information acquisition unit. The apparatus information acquisition unit acquires apparatus information indicating a use situation of a resource of the image forming apparatus 100.

If an application is installed in the image forming apparatus 100, the determination unit 165 determines whether or not the image forming apparatus 100 can stably execute the application. The determination unit 165 determines whether or not the respective values included in the acquired resource information and apparatus information satisfy a predetermined determination condition. The predetermined determination condition may be whether or not a value, obtained through calculation such as summation or comparison of the respective values included in the acquired resource information and apparatus information, satisfies a predetermined condition. The predetermined condition may be, for example, whether or not an obtained value exceeds a threshold value, and may be whether or not the apparatus has a specific function such as the use of stapling.

For example, if a value obtained by adding a network occupancy included in the resource information and a network occupancy included in the apparatus information satisfies a predetermined determination condition, the determination unit 165 may determine that the installed application is stably executed. If the value does not satisfy the predetermined determination condition, the determination unit 165 may determine that there is a probability that the installed application may not be executed. The predetermined determination condition may be, for example, whether or not a threshold value exceeds 100%, and may be whether or not the threshold value exceeds 80%. The determination unit 165 may perform the determination by using a CPU occupancy instead of the network occupancy, and may perform the determination by using the network occupancy and the CPU occupancy. The determination unit 165 may perform the determination through calculation such as summation or comparison of the respective values included in the resource information and the apparatus information.

If the resource information and the apparatus information are correlated with the date and time, the determination unit 165 may determine whether or not the respective values satisfy a predetermined determination condition every correlated date and time. For example, a value of the CPU occupancy of the resource information is 70% in the forenoon and 30% in the afternoon, and a value of the CPU occupancy of the apparatus information is 10% in the forenoon and 60% in the afternoon. If the predetermined determination condition is, for example, whether or not a threshold value exceeds 100%, the CPU occupancy satisfies the predetermined determination condition through the forenoon and afternoon. Therefore, the determination unit 165 may determine that the installed application is stably executed. The determination unit 165 may perform the determination by using the network occupancy instead of the CPU occupancy, and may perform the determination by using the network occupancy and the CPU occupancy. The determination unit 165 may perform the determination through calculation such as summation or comparison of the respective values included in the resource information and the apparatus information correlated with the date and time.

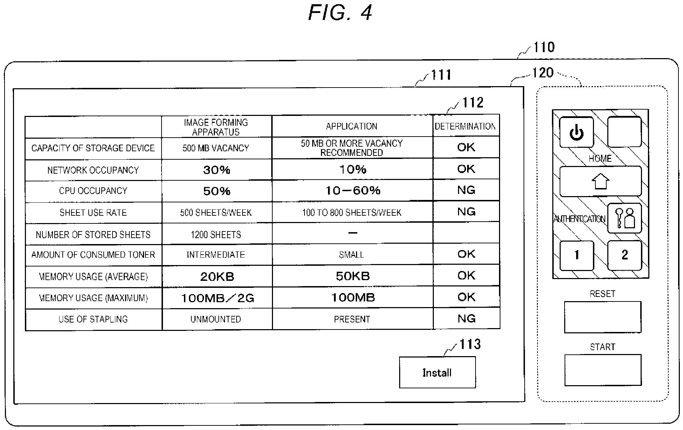

The image generation unit 166 generates image information indicating a result of the determination performed by the determination unit 165. The image generation unit 166 displays the generated image information on the display 110. The image generation unit 166 displays a result of determining whether or not the image forming apparatus 100 has a resource required to execute an application for each resource in a table form. FIG. 4 is a diagram illustrating one specific example of an image indicating a determination result of the exemplary embodiment. The image generation unit 166 may be configured to output image information to an external terminal connected to the image forming apparatus 100.

In FIG. 4, the display 110 includes a display unit 111 and the control panel 120. The display unit 111 includes a table 112 and a button 113. The display unit 111 is formed as a touch panel integrally with the control panel 120.

The table 112 is a table indicating one specific example of displaying a determination result. A determination result is displayed for each value of the apparatus information and the resource information determined by the determination unit 165. According to the table 112, that the respective values of a capacity of a storage device, a network occupancy, a CPU occupancy, a sheet use rate, the number of stored sheets, an amount of consumed toner, a memory usage (average), a memory usage (maximum), and the use of stapling were determined can be seen.

In the example illustrated in FIG. 4, it can be seen that the respective values of the capacity of a storage device, the network occupancy, the amount of consumed toner, the memory usage (average), and the memory usage (maximum) were determined as being OK. OK indicates that the installed application is stably executed since the predetermined condition is satisfied even if calculation such as summation or comparison of values of the apparatus information and the resource information is performed.

In contrast, it can be seen that the respective values of the CPU occupancy, the sheet use rate, and the use of stapling were determined as being NG. NG indicates that the predetermined condition is not satisfied if calculation such as summation or comparison of values of the apparatus information and the resource information is performed. Therefore, if the application is installed, the CPU occupancy may exceed 100%, and thus there is a probability that the application may not be stably executed. Since the number of used sheets is large, it can be seen that a frequency of refilling sheets is high and stapling cannot be used. In order to remove NG displayed in FIG. 4, a stapling option may be added, a paper feeding device may be added, or the application may be installed in an image forming apparatus having higher CPU capability.

The button 113 indicates an install button. If a user of the image forming apparatus 100 presses the button 113, an application starts to be installed. The image illustrated in FIG. 4 is one specific example, and an image indicating a determination result may be displayed in an aspect which is different from that in FIG. 4. For example, if a determination result includes NG, the button 113 may not be displayed, and, if the button 113 is touched, an alert sentence for warning that NG is included may be displayed.

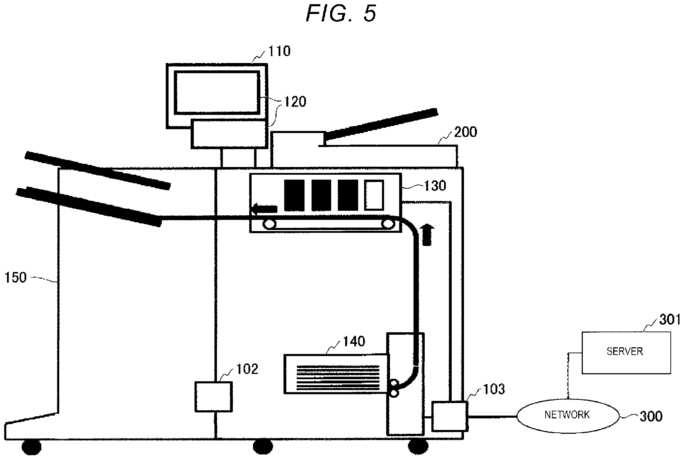

FIG. 5 is a diagram illustrating one specific example if a peripheral apparatus is connected to the image forming apparatus 100 of the exemplary embodiment. The image forming apparatus 100 includes the peripheral apparatus connection unit 102, the external information input unit 103, the display 110, the control panel 120, the printer section 130, the sheet accommodation section 140, and the image reading section 200.

According to FIG. 5, the peripheral apparatus connection unit 102 is connected to a postprocessing apparatus 150. The postprocessing apparatus 150 is an apparatus performing postprocessing on a printed sheet. The postprocessing is processing such as stapling or hole punching performed on a printed sheet. The peripheral apparatus information acquisition unit 161 acquires the operation history regarding the postprocessing apparatus 150 via the peripheral apparatus connection unit 102.

The external information input unit 103 is connected to a server 301 via a network 300. The network 300 may be the Internet, and may be a LAN. The server 301 stores an application which can be installed in the image forming apparatus 100 and resource information of the application. The external information acquisition unit 163 acquires the application which can be installed in the image forming apparatus 100 and resource information of the application via the external information input unit 103. The image forming apparatus 100 illustrated in FIG. 5 is one specific example, and the image forming apparatus 100 may be configured in an aspect which is different from that in FIG. 5. For example, a plurality of peripheral apparatus connection units 102 may be provided, and the external information input unit 103 may be an optical disc drive.

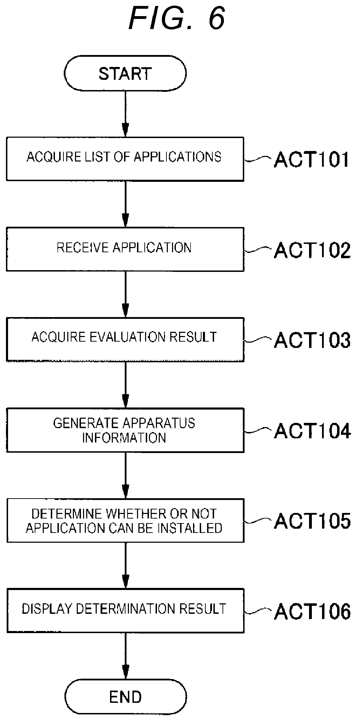

FIG. 6 is a flowchart illustrating a flow of an installation determination process of the exemplary embodiment. The external information acquisition unit 163 of the image forming apparatus 100 acquires a list of applications which can be installed from the outside (ACT 101). The outside may be, for example, a server on a network, and may be a storage device such as a USB memory. The control panel 120 of the image forming apparatus 100 receives selection of an application from the list of applications (ACT 102). The external information acquisition unit 163 acquires resource information regarding the selected application from the outside (ACT 103). The apparatus information generation unit 164 of the image forming apparatus 100 acquires a log from the log storage unit, and generates apparatus information (ACT 104). The determination unit 165 of the image forming apparatus 100 determines whether or not the application can be installed on the basis of the resource information and the apparatus information (ACT 105). The determination unit 165 determines whether or not respective values included in the resource information and the apparatus information satisfy a predetermined determination condition. The image generation unit 166 of the image forming apparatus generates image information on the basis of a determination result, and displays the image information on the display 110 (ACT 106).

In the image forming apparatus 100 configured in the above-described way, the external information acquisition unit 163 acquires resource information of an application from the outside, and the determination unit 165 determines that an added application is stably executed if a use situation of a resource of the image forming apparatus 100 and the resource information satisfy a predetermined determination condition. The predetermined determination condition may be, for example, a case where a result obtained through calculation such as summation of respective values included in resource information and apparatus information does not exceed a threshold value. A user of the image forming apparatus 100 can determine whether or not an application is to be installed on the basis of a determination result displayed on the display 110.

### Modification Examples

If resource information and apparatus information do not satisfy a predetermined determination condition, the determination unit 165 may prompt another image forming apparatus connected to the same network as a network connected to the image forming apparatus 100 to install an application. With this configuration, a user of the image forming apparatus 100 can install an application in another image forming apparatus and can use the application without reinforcement of the image forming apparatus 100.

If resource information and apparatus information do not satisfy a determination condition, the determination unit 165 may delete an application installed in the image forming apparatus 100 or may present an additional option. In this case, the determination unit 165 may specify an application causing a predetermined determination condition to be satisfied as a result of the application being deleted from the image forming apparatus 100 among installed applications. With this configuration, a user of the image forming apparatus 100 can use an application which is stably executed even after the application is installed.

In the present exemplary embodiment, the peripheral apparatus information acquisition unit 161, the log generation unit 162, the external information acquisition unit 163, the apparatus information generation unit 164, the determination unit 165, and the image generation unit 166 are software functional units, but may be hardware functional units such as an LSI.

According to the above-described exemplary embodiment, the image forming apparatus and the image forming method capable of determining whether or not an added application is stably executed can be provided by including the external information acquisition unit 163 and the determination unit 165.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An image forming apparatus comprising:
a processor including a resource information acquisition unit, an apparatus information acquisition unit, and a determination unit,
the resource information acquisition unit configured to acquire resource information indicating a resource of the image forming apparatus required to execute an application;
the apparatus information acquisition unit configured to acquire apparatus information indicating a use situation of the resource of the image forming apparatus; and
the determination unit configured to determine whether or not the image forming apparatus can execute the application when the application is installed on the basis of the resource information and the apparatus information.

2. The apparatus according to claim 1, further comprising:
an image generator configured to generate image information indicating a result determined by the determination unit; and
an output device configured to output the image information.

3. The apparatus according to claim 2, wherein when the result indicates that the image forming apparatus can execute the application, the output device is configured to display image information prompting a user to install the application, and when the result indicates that the image forming apparatus cannot execute the application, the output device is configured to not display image information prompting a user to install the application.

4. The apparatus according to claim 2, wherein when the result indicates that the image forming apparatus cannot execute the application, the determination unit is configured to prompt another image forming apparatus connected to a same network as the image forming apparatus to install the application.

5. The apparatus according to any of claims 2 to 4,
wherein the image generator is configured to generate image information for displaying a result of determining whether or not the image forming apparatus has a resource required to execute the application in a table form for each resource.

6. The apparatus according to any of claims 1 to 5,
wherein, when the application as a first application is installed and an operation of the image forming apparatus is unstable, the determination unit is configured to specify a second application among applications already installed in the image forming apparatus, the first application being able to be executed by deleting the second application from the image forming apparatus.

7. The apparatus according to any of claims 1 to 6, wherein the determination unit is configured to determine whether or not the image forming apparatus can execute the application based on whether the resource information and the apparatus information satisfy a predetermined determination condition.

8. The apparatus according to claim 7, wherein the predetermined determination condition is a value obtained from the resource information and the apparatus information exceeding a threshold value.

9. The apparatus according to claim 7 or 8, wherein the predetermined determination condition is whether the apparatus information indicates the apparatus has a specific function.

10. The apparatus according to claim 9, wherein when the apparatus information indicates the apparatus does not have the specific function, the apparatus is configured to add the specific function.

11. An image forming method comprising:
acquiring resource information indicating a resource of an image forming apparatus required to execute an application;
acquiring apparatus information indicating a use situation of the resource of the image forming apparatus; and
determining whether or not the image forming apparatus can execute the application when the application is installed on the basis of the resource information and the apparatus information.

12. The image forming method according to claim 11, further comprising:
generating image information indicating a result determined by the determining; and
outputting the image information.

13. The image forming method according to claim 12, wherein when the result indicates that the image forming apparatus can execute the application, displaying image information prompting a user to install the application, and when the result indicates that the image forming apparatus cannot execute the application, not displaying image information prompting a user to install the application.

14. The image forming method according to claim 12, wherein when the result indicates that the image forming apparatus cannot execute the application, prompting another image forming apparatus connected to a same network as the image forming apparatus to install the application.

15. The image forming method according to any of claims 12 to 14, further comprising:
generating image information for displaying a result of determining whether or not the image forming apparatus has a resource required to execute the application in a table form for each resource.
